# EUROPÄISCHE PATENTSCHRIFT

(11) **EP 4 334 146 B1**
(45) Veröffentlichungstag und Bekanntmachung des Hinweises auf die Patenterteilung: **05.03.2025**
(21) Anmeldenummer: 22730808.7
(22) Anmeldetag: 25.05.2022
(51) Int. Cl.: B60H 1/00, B60H 1/03, B61D 27/00, B60H 1/32

(54) **KLIMATISIERUNGSANORDNUNG FÜR EINEN INNENRAUM EINES FAHRZEUGS**
AIR-CONDITIONING ARRANGEMENT FOR AN INTERIOR OF A VEHICLE
SYSTÈME DE CLIMATISATION DESTINÉ À L'HABITACLE D'UN VÉHICULE

(30) Priorität: 30.06.2021 DE 102021206802
(43) Veröffentlichungstag der Anmeldung: 13.03.2024
(73) Patentinhaber: Siemens Mobility GmbH, 81739 München (DE)
(72) Erfinder: KASAP, Irfan, 44653 Herne (DE); SCHMITZ, Markus, 52379 Langerwehe (DE)
(74) Vertreter: Siemens Patent Attorneys
(86) Internationale Anmeldenummer: PCT/EP2022/064249
(87) Internationale Veröffentlichungsnummer: WO 2023/274638

(56) Entgegenhaltungen:
- EP-A1- 3 538 386
- DE-A1- 102014 226 512
- DE-A1- 102016 219 205
- DE-A1- 102019 210 084

## Beschreibung

Die Erfindung bezieht sich auf eine Klimatisierungsanordnung für einen Innenraum eines Fahrzeugs nach dem Oberbegriff von Anspruch 1. Danach umfasst die Klimatisierungsanordnung ein Klimagerät zur Bereitstellung von klimatisierter Raumluft und ein in dem Innenraum angeordnetes Kühlaggregat, das einen Kältekreis aufweist, der zur Entwärmung eines Kältemittels des Kältekreises einen Wärmetauscher aufweist, der mit der Raumluft beaufschlagt ist.

Beispielsweise sind aus der DE 198 47 504 C1, die ein Verfahren zur Steuerung der Luftvolumenströme in einer raumlufttechnischen Anlage zum Gegenstand hat, der DE 10 2019 210 084 A1, die ein Fahrzeug mit einer Entlüftungsvorrichtung und einer Kühlboxeinrichtung betrifft, und der DE 10 2012 108 886 A1, in der eine Wärmeübertrageranordnung und ein Klimatisierungssystem eines Kraftfahrzeuges offenbart ist, jeweils Klimatisierungsanordnungen der eingangs genannten Art bekannt.

Eine solche Klimatisierungsanordnung liegt beispielsweise in Innenräumen von Fahrzeugen, insbesondere Schienenfahrzeugen, vor. So ist der Innenraum einer Bordküche, was seine Raumluft angeht, mittels eines Klimagerätes klimatisiert, welches wesentliche Parameter der Raumluft, wie Temperatur und Feuchtigkeit, gemäß vorgegebenen Werten bereitstellt. In einer solchen Bordküche sind zudem Kühlaggregate vorgesehen, die beispielsweise bei Kühlschränken, Gefrierschränken, gekühlten Vitrinen usw. zum Bereitstellen von Kälteleistung dienen.

Eine Entwärmung eines Kältemittels des Kühlaggregats erfolgt am Wärmeübertrager/Kondensator des Kühlaggregats, und zwar mitttels der in dem Innenraum vorhandenen Raumluft.

Bei einer solchen Klimatisierungsanordnung besteht die Aufgabe, die Abwärme eines Kühlaggregates möglichst effizient abzuführen.

Diese Aufgabe wird gelöst durch eine Klimatisierungsanordnung nach Anspruch 1.

Danach zeichnet sich die eingangs beschriebene Klimatisierungsanordnung dadurch aus, dass der Wärmetauscher räumlich in einen Heißgasabschnitt und in einen Niedertemperaturabschnitt aufgeteilt ist, die zum Entwärmen des Wärmetauschers angesaugte Raumluft in einen Fortluftanteil und einen Umluftanteil aufgeteilt ist, wobei der Niedertemperaturabschnitt des Wärmetauschers mit dem Umluftanteil der Raumluft und der Heißgasabschnitt des Wärmtauschers mit dem Fortluftanteil der Raumluft beaufschlagt ist.

Durch die Maßnahme, den Heißgasabschnitt mit dem Fortluftanteil und den Niedertemperaturabschnitt mit dem Umluftanteil zu beaufschlagen, wird erreicht, dass der in den Innenraum des Fahrzeugs zurückzuleitenden Umluftanteil eine vergleichsweise niedrige Temperatur aufweist, so dass das Klimagerät, welches die Raumluft für den Innenraum des Fahrzeugs bereitstellt, mit geringerer (Kälte-)Leistung betrieben werden kann. Demgegenüber wird der Heißgasabschnitt des Wärmetauschers mit dem Fortluftanteil beaufschlagt, der nach Passieren des Heißgasabschnitts aus dem Fahrzeug abgeführt wird.

Es ist insbesondere auch möglich, dass der Niedertemperaturabschnitt nicht nur mit der später als Umluft zum Klimagerät zu fördernden Luft beaufschlagt wird, sondern mit einem Gesamt-Luftstrom, der erst nach einem Passieren des Niedertemperaturabschnitts in einen Umluft- und einen weiter zum Heißgasabschnitt zu führenden Fortluftanteil aufgeteilt wird.

Grundsätzlich sind als Wärmetauscher für das Kühlaggregat Wärmetauscher aller Art einsetzbar. Es ist jedoch bevorzugt, dass der Wärmetauscher bzw. Kondensator des Kältekreises als Kreuzgegenstrom-Wärmetauscher ausgebildet ist, da sich diese Bauart durch eine besonders hohe Effizienz bei den gegebenen Randbedingungen in einem Fahrzeug aufweist.

Der Heißgasabschnitt und der Niedertemperaturabschnitt des Wärmetauschers können unmittelbar aneinander angrenzen. Alternativ dazu ist es möglich, dass eine räumliche Trennung des Heißgasabschnitts und des Niedertemperaturabschnitts des Wärmetauschers vorgesehen ist.

In einer Weiterbildung der Erfindung ist dem Heißgasabschnitt ein Lüfter zum Ansaugen des Fortluftanteils aus der Raumluft und dem Niedertemperaturabschnitt ein Lüfter zum Ansaugen des Umluftanteils aus der Raumluft zugeordnet.Bei dieser Ausführungsform findet die Ansaugung von Kühlluft (spätere Umluft oder Fortluft) getrennt voneinander statt. Dem Heißgasabschnitt wird der Fortluftanteil und dem Niedertemperaturabschnitt wird der Umluftanteil der Raumluft unmittelbar zugeleitet.

Alternativ dazu ist es möglich, eine zwischen dem Heißgasabschnitt und dem Niedertemperaturabschnitt angeordnete Luftverteileinrichtung vorzusehen, welche die angesaugte Raumluft in den Fortluftanteil und den Umluftanteil aufteilt. Bei dieser Ausführungsform passiert die gesamte, z. B. mittels eines Lüfters angesaugte Raumluft den Niedertemperaturabschnitt des Kälteaggregats. Auf einer Austrittsseite des Niedertemperaturabschnitts koppelt die Luftverteileinrichtung einen Umluftanteil aus dem dort vorliegenden Luftstrom aus und leitet diesen zurück in den Innenraum des Fahrzeugs. Ein verbleibender Fortluftanteil der angesaugten Raumluft wird weiter zum Heißgasabschnitt des Wärmetauschers geführt und entwärmt das Kühlmittel des Kältekreises des Kühlaggregats in dem Heißgasabschnitt.

Vorzugsweise ist der Volumenstrom des Fortluftanteils kleiner als der Volumenstrom des Umluftanteils. Da der Fortluftanteil mit wesentlich höherer Temperatur den Wärmetauscher verlässt, als der Umluftanteil ist es grundsätzlich von Vorteil, wenn der Umluftanteil im Vergleich zum Fortluftanteil groß ist. Allerdings ist zu beachten, dass die erforderliche Endtemperatur des Kühlmittels, die bei Verlassen des Wärmetauschers vorliegen muss, auch erreicht wird. Je nach Anwendungsfall gibt es somit einzuhaltende Randbedingungen für ein Mindestanteil der Raumluft, der als Fortluft abzuführen ist.

Vorzugsweise beträgt der Volumenstrom des Fortluftanteils weniger als 40% des Volumenstroms der angesaugten Raumluft.

Das Kühlaggregat kann insbesondere als Gaskühler ausgeführt sein, bei dem der Heißgasabschnitt und der Niedertemperaturabschnitt jeweils räumlich voneinander getrennt und allgemein rechtwinklig, ggf. mit denselben Breitenabmessungen, ausgebildet sind.

Ausführungsbeispiele der Erfindung werden nachfolgend unter Bezugnahme auf die Zeichnungen noch näher erläutert, wobei gleiche Komponenten mit denselben Bezugszeichen bezeichnet sind. Es zeigen:
- Figur 1: eine schematische Darstellung einer Klimatisierungsanordnung für einen Fahrzeuginnenraum in einer ersten Ausführungsform,
- Figur 2: eine schematische Darstellung einer strömungstechnischen Verschaltung der Klimatisierungsanordnung von Figur 1,
- Figur 3: eine schematische, grafische Darstellung von Temperaturverläufen eines Heißgasabschnitts der Klimatisierungsanordnung von Figur 1,
- Figur 4: eine schematische grafische Darstellung von Temperaturverläufen eines Niedertemperaturabschnitts der Klimatisierungsanordnung von Figur 1,
- Figur 5: eine schematische Darstellung einer Klimatisierungsanordnung für einen Fahrzeuginnenraum in einer zweiten Ausführungsform,
- Figur 6: eine schematische Darstellung einer strömungstechnischen Verschaltung der Klimatisierungsanordnung von Figur 5,
- Figur 7: eine schematische, grafische Darstellung von Temperaturverläufen eines Heißgasabschnitts der Klimatisierungsanordnung von Figur 5 und
- Figur 8: eine schematische grafische Darstellung von Temperaturverläufen eines Niedertemperaturabschnitts der Klimatisierungsanordnung von Figur 5.

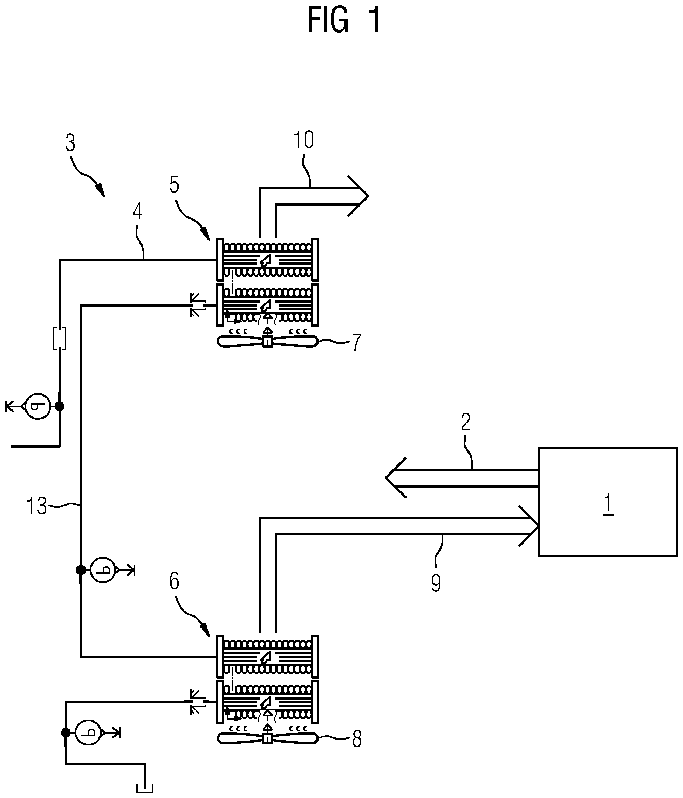

Die Figuren 1 bis 4 veranschaulichen eine erste Ausführungsform einer Klimatisierungsanordnung für eine Bordküche als Beispiel für einen Innenraum eines Fahrzeugs, insbesondere Schienenfahrzeugs. Ein Klimagerät 1 stellt für den Innenraum des Fahrzeugs klimatisierte Raumluft 2 bereit. In dem Innenraum des Fahrzeugs ist ein Kühlaggregat, im vorliegenden Ausführungsbeispiel ein Gaskühler 3 angeordnet, der zum Bereitstellen von Kälteleistung für beispielsweise Kühlschränke, Gefrierschränke, gekühlte Vitrinen eingesetzt wird. Der Gaskühler 3 wird mit einem Kältemittel betrieben, das in einem Kältekreis 4 geführt ist. Figur 1 zeigt aus Gründen der Übersichtlichkeit lediglich einen als Wärmetauscher ausgeführten Kondensator dieses Kältekreises 4, der zum Entwärmen des Kältemittels verwendet wird.

Der Kondensator ist räumlich in einen Heißgasabschnitt 5 und einen Niedertemperaturabschnitt 6 aufgeteilt. Im vorliegenden Ausführungsbeispiel ist dem Heißgasabschnitt 5 ein Lüfter 7 und dem Niedertemperaturabschnitt 6 ein Lüfter 8 zugeordnet. Sowohl der Lüfter 7 als auch der Lüfter 8 saugen Raumluft 2 aus dem Innenraum des Fahrzeugs an. Dabei kann beispielshalber der von dem Lüfter 7 geförderte Luftvolumenstrom 350m³/h und der von dem Lüfter 8 geförderte Luftvolumenstrom 500m³/h betragen.

Mit Hilfe des Lüfters 8 wird an dem Niedertemperaturabschnitt 6 Raumluft vorbeigeführt, die nach Passieren des Niedertemperaturabschnitts 6 als Umluft 9 zum Klimagerät 1 zurückgeführt wird. Das Klimagerät 1 bereitet die Umluft 9 hinsichtlich Temperatur und Feuchtigkeit derart auf, dass sie wiederum als Raumluft 2 in den Innenraum des Fahrzeugs abgegeben werden kann. Typischer Weise handelt es sich bei der Raumluft 2 um ein Gemisch aus der Umluft 9 und aus einer Umgebung des Fahrzeugs angesaugter Frischluft.

Die von dem Lüfter 7 angesaugte Raumluft passiert den Heißgasabschnitt 5 und wird sodann als Fortluft 10 nach außerhalb des Fahrzeugs abgeführt.

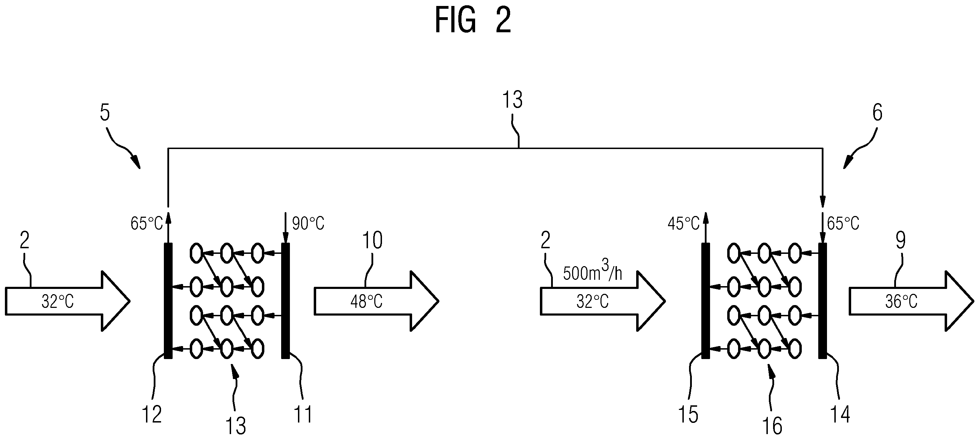

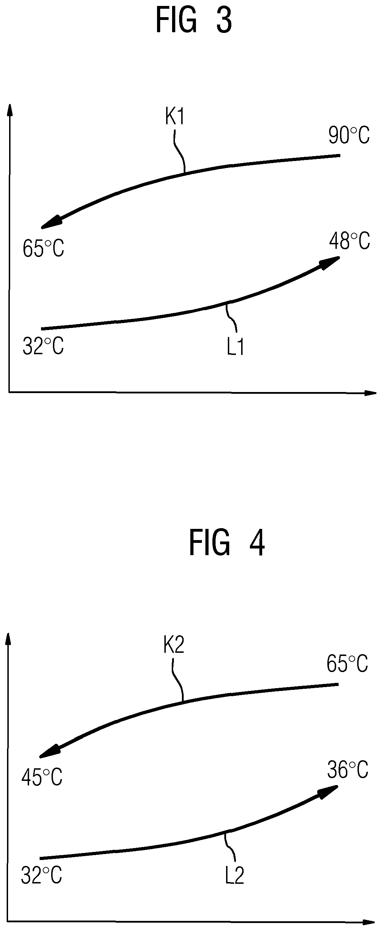

Die Wechselwirkung der jeweils angesaugten Raumluft 2 mit dem Niedertemperaturabschnitt 6 und dem Heißgasabschnitt 5 geht näher aus Figur 2 hervor. Die Struktur des Wärmetauschers, der den Kondensator des Kältekreises des Gaskühlers 3 bildet, entspricht derjenigen eines Kreuzgegenstromwärmetauschers. Im Bereich einer Verteilerleitung 11 beträgt die Temperatur des in den Heißgasabschnitt 5 einströmenden Kältemittels 90°C. Zwischen der Verteilerleitung 11 und einer Sammlerleitung 12 ist eine Leitungsanordnung 13 vorgesehen, in deren Bereich der Heißgasabschnitt 5 mit Raumluft zur Entwärmung des Kältemittels wechselwirkt. Das hat zur Folge, dass die Temperatur des Kühlmittels in einer Sammlerleitung 12 65°C beträgt. Dieser Temperaturverlauf für das Kühlmittel ergibt sich auch aus Figur 3, wobei eine Kurve K1 den Temperaturverlauf des Kühlmittels und eine Kurve L1 einen Temperaturverlauf für die Raumluft 2 darstellt, jeweils über die Strecke zwischen der Sammlerleitung 12 und der Verteilerleitung 11. Die zum Kühlen des Kühlmittels im Bereich des Heißgasabschnitts 5 verwendete Raumluft 2 wird nach Passieren des Heißgasabschnitts 5 als die Fortluft 10 abgeführt. Dabei ist die Leistung des Lüfters 7 so bemessen, dass etwa 350m³/h an Raumluft 2 im Bereich des Heißgasabschnitts 5 angesaugt werden.

Das im Bereich des Heißgasabschnitts 5 auf eine Temperatur von 65°C abgekühlte Kältemittel wird mittels einer Strömungsleitung 13 zu einer Verteilerleitung 14 des Niedertemperaturabschnitts 6 geführt. Wiederum ist zwischen der Verteilerleitung 14 und einer Sammlerleitung 15 des Niedertemperaturabschnitts 6 eine Leitungsanordnung 16 angeordnet, in deren Bereich eine Wechselwirkung zwischen der Raumluft 2 und dem Kältemittel des Kältekreises des Gaskühlers 3 von Statten geht. Im Bereich der Sammlerleitung 15 beträgt die Kühlmitteltemperatur im vorliegend erläuterten Beispiel 45°C. Die Raumluft 2, welche den Niedertemperaturabschnitt 6 passiert hat, wird als Umluft 9 zur Nachbehandlung dem Klimagerät 1 zugeführt.

Figur 4 zeigt schematisch die Temperaturverläufe K2 und L2 für das Kältemittel bzw. die Raumluft im Bereich des Niedertemperaturabschnitts 6.

Sowohl im Bereich des Heißgasabschnitts 5 als auch im Bereich des Niedertemperaturabschnitts 6 beträgt die Temperatur der angesaugten Raumluft 32°C. Die Temperatur der Umluft 9 liegt bei 36°C, so dass das Klimagerät 1, welches die Raumluft 2 für den Innenraum des Fahrzeugs bereitstellt, lediglich vergleichsweise wenig Kälteleistung aufbringen muss, um eine gewünschte Solltemperatur für die in den Fahrgastinnenraum einzuleitende Raumluft 2 bereitzustellen.

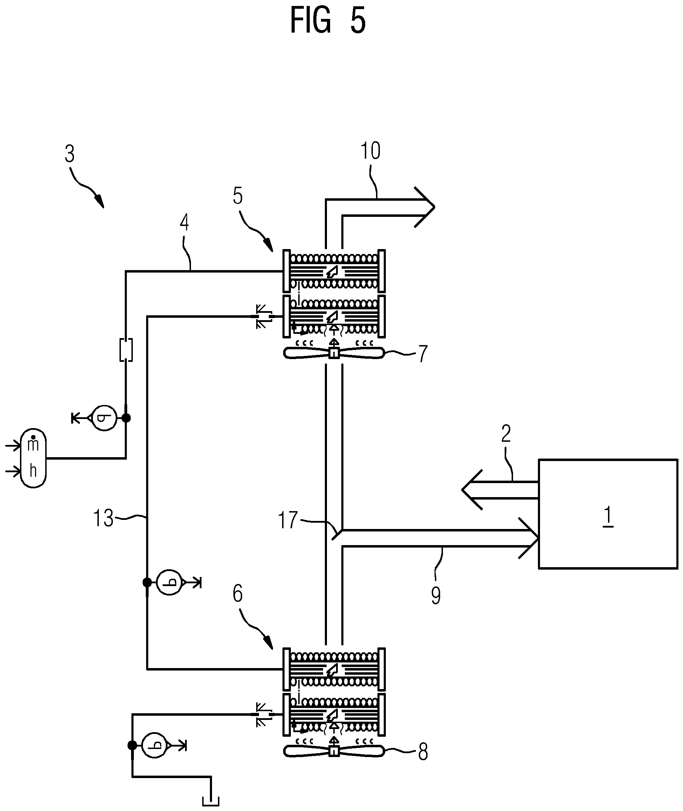

Die Figuren 5, 6, 7, 8 veranschaulichen ein zweites Ausführungsbeispiel, bei dem im Vergleich zum ersten Ausführungsbeispiel ausschließlich die Art der Ansaugung der Raumluft 2 im Bereich des Heißgasabschnitts 5 und die Art der Führung der Umluft 9 von dem Niedertemperaturabschnitt 6 zum Klimagerät 1 geändert ist.

Im Gegensatz zum ersten Ausführungsbeispiel wird bei der Klimatisierungsanordnung nach Figur 5 auf einen Lüfter zum unmittelbaren Ansaugen von Raumluft 2 für den Heißgasabschnitt 5 verzichtet. Stattdessen wird Raumluft 2 ausschließlich durch den Lüfter 8 angesaugt, der dem Niedertemperaturabschnitt 6 zugeordnet ist. Sämtliche angesaugte Raumluft 2 wird nach Passieren des Niedertemperaturabschnitts 6 in Richtung auf den Heißgasabschnitt 5 geführt. Auf diesem Strömungsweg ist jedoch eine Luftverteileinrichtung 17, die als Leitblech ausgeführt sein kann, angeordnet. Diese Luftverteileinrichtung 17 koppelt aus dem von dem Niedertemperaturabschnitt 6 kommenden Luftstrom einen Anteil aus, der als die Umluft 9 zum Klimagerät 1 zu führen ist. Ein nicht ausgekoppelter Anteil des Luftstroms, der von dem Niedertemperaturabschnitt 6 kommt, wird dem Heißgasabschnitt 5 zugeleitet und verlässt den Gaskühler 3 als die Fortluft 10.

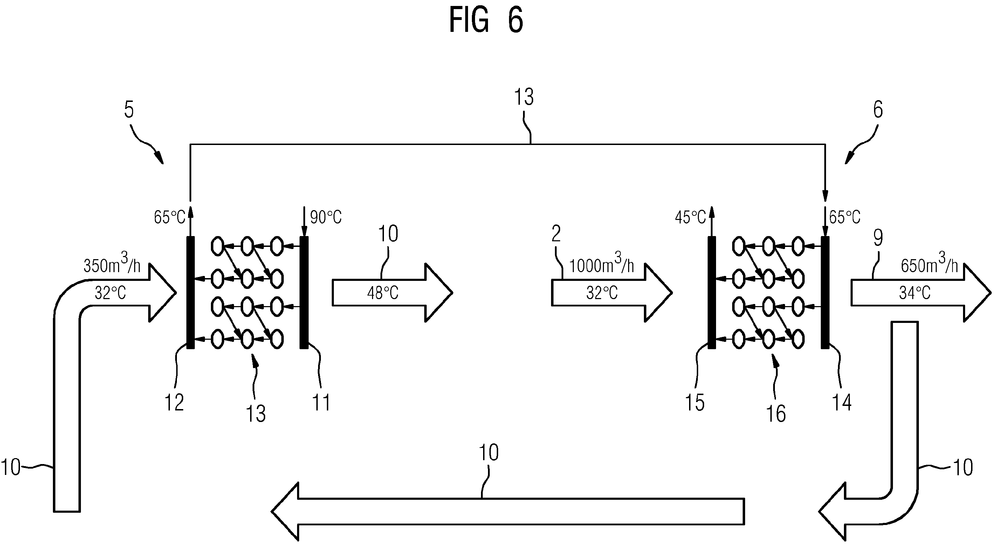

Wie aus Figur 6 hervorgeht, saugt der Lüfter 8 beispielsweise einen Luftvolumenstrom von 1000m³/h an, nach Verlassen des Niedertemperaturabschnitts 6 wird ein Anteil von 650m³/h als Umluft 9 ausgekoppelt, während verbleibende 350m³/h dem Heißgasabschnitt 5 zugeleitet werden und diesen als die Fortluft 10 verlassen.

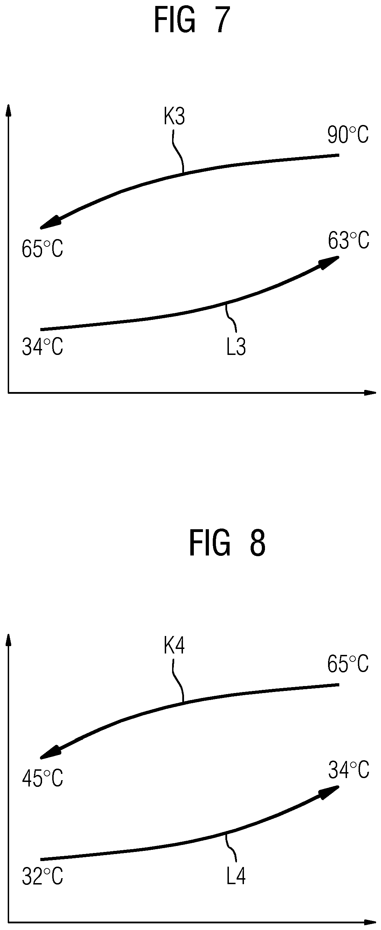

Für die Temperaturverläufe des Kühlmittels und der den Heißgasabschnitt 5 passierenden Luft ergeben sich die Kurven K3, L3 von Figur 7. Die Verhältnisse am Niedertemperaturabschnitt 6 gehen aus Figur 8 hervor, vgl. die Temperaturverläufe K4, L4. Es ist ersichtlich, dass an der Verteilerleitung 11 des Heißgasabschnitts 5 das Kühlmittel eine Temperatur von 90°C aufweist, die nach Wechselwirkung mit dem Fortluftstrom 10 im Bereich der Sammlerleitung 12 des Heißgasabschnitts 5 auf 65°C abgesunken ist. Im Bereich des Niedertemperaturabschnitts 6 sinkt die Kühlmitteltemperatur von 65°C auf 45°C.

Die Kurve L4 von Figur 8 veranschaulicht, dass die Temperatur des Luftstroms nach Passieren des Niedertemperaturabschnitts 6 34°C beträgt. Dies ist die Temperatur, die dann näherungsweise auch am Klimagerät 1 für die Umluft 9 vorliegt. Im Vergleich zum ersten Ausführungsbeispiel ist die Umlufttemperatur somit 2°C niedriger, so dass die Leistungsanforderungen an das Klimagerät 1 zum Konditionieren der Umluft 9 insgesamt günstiger sind.

## Patentansprüche

1. Klimatisierungsanordnung für einen Innenraum eines Fahrzeugs, mit einem Klimagerät (1) zur Bereitstellung von klimatisierter Raumluft (2) und einem in dem Innenraum angeordneten Kühlaggregat, das einen Kältekreis (4) aufweist, der zur Entwärmung eines Kältemittels des Kältekreises (4) einen Wärmetauscher aufweist, der mit der Raumluft (2) beaufschlagt ist,
**dadurch gekennzeichnet, dass**
der Wärmetauscher räumlich in einen Heißgasabschnitt (5) und in einen Niedertemperaturabschnitt (6) aufgeteilt ist, die zum Entwärmen des Wärmetauschers angesaugte Raumluft (2) in einen Fortluftanteil (10) und einen Umluftanteil (9) aufgeteilt ist, wobei der Niedertemperaturabschnitt (6) des Wärmetauschers mit dem Umluftanteil (9) der Raumluft (2) und der Heißgasabschnitt (5) des Wärmetauschers mit dem Fortluftanteil (10) der Raumluft (2) beaufschlagt ist.

2. Klimatisierungsanordnung nach Anspruch 1,
**dadurch gekennzeichnet, dass**
der Wärmetauscher als Kreuzgegenstrom-Wärmetauscher ausgebildet ist.

3. Klimatisierungsanordnung nach Anspruch 1 oder 2,
**dadurch gekennzeichnet, dass**
der Heißgasabschnitt (5) und der Niedertemperaturabschnitt (6) des Wärmetauschers unmittelbar aneinander angrenzen.

4. Klimatisierungsanordnung nach einem der Ansprüche 1 oder 2,
**dadurch gekennzeichnet, dass**
der Heißgasabschnitt (5) und der Niedertemperaturabschnitt (6) des Wärmetauschers räumlich voneinander getrennt sind.

5. Klimatisierungsanordnung nach einem der Ansprüche 1 bis 4, **dadurch gekennzeichnet, dass**
dem Heißgasabschnitt (5) ein Lüfter (7) zum Ansaugen des Fortluftanteils (10) aus der Raumluft (2) und dem Niedertemperaturabschnitt (6) ein Lüfter (8) zum Ansaugen des Umluftanteils (9) aus der Raumluft (2) zugeordnet ist.

6. Klimatisierungsanordnung nach einem der Ansprüche 1 bis 4, **dadurch gekennzeichnet, dass**
eine zwischen dem Heißgasabschnitt (5) und dem Niedertemperaturabschnitt (6) angeordnete Luftverteileinrichtung vorgesehen ist, welche angesaugte Raumluft (2) in den Fortluftanteil (10) und den Umluftanteil (9) aufteilt.

7. Klimatisierungsanordnung nach einem der Ansprüche 1 bis 6, **dadurch gekennzeichnet, dass**
der Volumenstrom des Fortluftanteils (10) kleiner als der Volumenstrom des Umluftanteils (9) bemessen ist.

8. Klimatisierungsanordnung nach Anspruch 7,
**dadurch gekennzeichnet, dass**
der Volumenstrom des Fortluftanteils (10) weniger als 40% des Volumenstroms der angesaugten Raumluft (2) beträgt.

9. Klimatisierungsanordnung nach einem der Ansprüche 1 bis 8, **dadurch gekennzeichnet, dass**
das Kühlaggregat als Gaskühler (3) ausgeführt ist, bei dem der Heißgasabschnitt (9) und der Niedertemperaturabschnitt (6) jeweils allgemein rechtwinklig ausgebildet sind.

## Claims

1. Air conditioning arrangement for an interior of a vehicle, with a climate control unit (1) for providing air-conditioned ambient air (2) and a cooling unit arranged in the interior which has a cooling circuit (4), which has a heat exchanger for cooling a refrigerant of the cooling circuit (4), said heat exchanger being applied with ambient air (2), **characterised in that**
the heat exchanger is spatially divided into a hot gas portion (5) and into a low temperature portion (6), the ambient air (2) drawn in in order to cool the heat exchanger is divided into an exhaust air portion (10) and a circulating air portion (9), wherein the low temperature portion (6) of the heat exchanger is applied with the circulating air portion (9) of the ambient air (2) and the hot gas portion (5) of the heat exchanger is applied with the exhaust air portion (10) of the ambient air (2).

2. Air-conditioning arrangement according to claim 1, **characterised in that**
the heat exchanger is embodied as a cross counterflow heat exchanger.

3. Air-conditioning arrangement according to claim 1 or 2, **characterised in that**
the hot gas portion (5) and the low temperature portion (6) of the heat exchanger adjoin one another directly.

4. Air-conditioning arrangement according to one of claims 1 or 2,
**characterised in that**
the hot gas portion (5) and the low temperature portion (6) of the heat exchanger are spatially separated from one another.

5. Air-conditioning arrangement according to one of claims 1 to 4, **characterised in that** a fan (7) for drawing in the exhaust air portion (10) from the ambient air (2) is assigned to the hot gas portion (5) and a fan (8) for drawing in the circulating air portion (9) from the ambient air (2) is assigned to the low temperature portion (6).

6. Air-conditioning arrangement according to one of claims 1 to 4,
**characterised in that**
an air distribution facility arranged between the hot gas portion (5) and the low temperature portion (6) is provided which divides drawn-in ambient air (2) into the exhaust gas portion (10) and the circulating air portion (9).

7. Air-conditioning arrangement according to one of claims 1 to 6,
**characterised in that**
the volume flow of the exhaust air portion (10) is dimensioned smaller than the volume flow of the circulating air portion (9).

8. Air-conditioning arrangement according to claim 7, **characterised in that**
the volume flow of the exhaust air portion (10) is less than 40% of the volume flow of the drawn-in ambient air (2).

9. Air-conditioning arrangement according to one of claims 1 to 8,
**characterised in that**
the cooling unit is designed as a gas cooler (3), in which the hot gas portion (9) and the low temperature portion (6) are each embodied generally to be rectangular.

## Revendications

1. Système de conditionnement d'air de l'espace intérieur d'un véhicule comprenant un appareil (1) de conditionnement d'air pour disposer d'air (2) d'espace conditionné et un groupe de refroidissement, qui est monté dans l'espace intérieur et qui a un circuit (4) frigorifique, lequel a, pour dissiper de la chaleur d'un agent frigorifique du circuit (4) frigorifique, un échangeur de chaleur, qui est alimenté en l'air (2) d'espace, **caractérisé en ce que**
l'échangeur de chaleur est subdivisé dans l'espace en une partie (5) de gaz chaud et en une partie (6) à basse température, l'air (2) d'espace aspiré pour dissiper de la chaleur de l'échangeur de chaleur est subdivisé en une partie (10) d'air d'échappement et en une partie (9) d'air de recirculation, dans lequel la partie (6) à basse température de l'échangeur de chaleur est alimentée en la partie (9) d'air de recirculation de l'air (2) d'espace et la partie (5) de gaz chaud de l'échangeur de chaleur en la partie (10) d'air d'échappement de l'air (2) d'espace.

2. Système de conditionnement d'air suivant la revendication 1,
**caractérisé en ce que**
l'échangeur de chaleur est constitué sous la forme d'un échangeur de chaleur à contre-courant croisé.

3. Système de conditionnement d'air suivant la revendication 1 ou 2,
**caractérisé en ce que**
la partie (5) de gaz chaud et la partie (6) à basse température de l'échangeur de chaleur sont directement voisines l'une de l'autre.

4. Système de conditionnement d'air suivant l'une des revendications 1 ou 2,
**caractérisé en ce que**
la partie (5) de gaz chaud et la partie (6) à basse température de l'échangeur de chaleur sont séparées l'une de l'autre dans l'espace.

5. Système de conditionnement d'air suivant l'une des revendications 1 à 4,
**caractérisé en ce qu'**
il est associé à la partie (5) de gaz chaud, un ventilateur (7) pour aspirer la partie (10) d'air d'échappement de l'air (2) d'espace et à la partie (6) à basse température, un ventilateur (8) pour aspirer la partie (9) d'air de recirculation de l'air (2) d'espace.

6. Système de conditionnement d'air suivant l'une des revendications 1 à 4,
**caractérisé en ce qu'**
il est prévu un dispositif de répartition de l'air, qui est disposé entre la partie (5) de gaz chaud et la partie (6) à basse température et qui subdivise de l'air (2) d'espace aspiré en la partie (10) d'air d'échappement et en la partie (9) d'air de recirculation.

7. Système de conditionnement d'air suivant l'une des revendications 1 à 6,
**caractérisé en ce que**
le courant en volume de la partie (10) d'air d'échappement est plus petit que le courant en volume de la partie (9) d'air de recirculation.

8. Système de conditionnement d'air suivant la revendication 7,
**caractérisé en ce que**
le courant en volume de la partie (10) d'air d'échappement représente moins de 40 % du courant en volume de l'air (2) d'espace aspiré.

9. Système de conditionnement d'air suivant l'une des revendications 1 à 8,
**caractérisé en ce que**
le groupe frigorifique est réalisé sous la forme d'un refroidisseur (3) à gaz, dans lequel la partie (9) de gaz chaud et la partie (6) à basse température sont constituées respectivement d'une manière générale à angle droit.
